# EUROPÄISCHE PATENTSCHRIFT

(11) **EP 3 218 971 B1**
(45) Veröffentlichungstag und Bekanntmachung des Hinweises auf die Patenterteilung: **02.12.2020**
(21) Anmeldenummer: 15786907.4
(22) Anmeldetag: 23.10.2015
(51) Int. Cl.: H01T 1/14, H01T 4/10, H01T 4/12, H01T 4/16

(54) **ABLEITER**
ARRESTER
PARAFOUDRE

(30) Priorität: 11.11.2014 DE 102014116440
(43) Veröffentlichungstag der Anmeldung: 20.09.2017
(73) Patentinhaber: TDK Electronics AG, 81671 München (DE)
(72) Erfinder: BOBERT, Peter, 14612 Falkensee (DE); WERNER, Frank, 13591 Berlin (DE)
(74) Vertreter: Epping - Hermann - Fischer
(86) Internationale Anmeldenummer: PCT/EP2015/074631
(87) Internationale Veröffentlichungsnummer: WO 2016/074909

(56) Entgegenhaltungen:
- WO-A1-87/06399
- DE-A1-102004 025 912
- DE-A1-102008 022 794
- DE-U1-202006 020 737
- US-A1- 2009 128 978

## Beschreibung

Die Erfindung betrifft einen Ableiter mit einer ersten und einer zweiten Elektrode sowie einem Schaltkontakt. Ferner ist ein Kurzschlussmechanismus vorgesehen.

Ableiter, die in Bereichen eingesetzt werden, an denen eine Überlastung droht, werden mit einem Kurzschlussmechanismus, auch "Failshort" genannt, ausgestattet, der eine Überhitzung und damit Brandgefahr verhindert indem der Ableiter elektrisch kurz geschlossen wird. WO 87/06399 A1, US 2009/128978 A1, DE 10 2004 025 912 A1 und DE 10 2008 022794 A1 zeigen konventionelle Ableiter.

Um beim Ansprechen des Kurzschlussmechanismus des Ableiters in einer Schaltung an anderer Stelle der Schaltung einen Schaltvorgang auszuführen, kann ein Federkontakt auf der Platine mit der Schaltung vorgesehen sein. Dieser ist unter Federspannung mit dem Ableiter verbunden und wird bei Übertemperatur freigegeben, sodass er beim Zurückfedern in seine Ruhelage einen Kontakt schließen kann.

Es stellt sich die Aufgabe eine alternative Lösung für solch einen Schaltvorgang bereitzustellen.

Zur Lösung der Aufgabe ist vorgesehen: ein Ableiter mit - einer ersten Elektrode, einer zweiten Elektrode und einem Schaltkontakt, wobei in einem ersten Zustand zumindest eine Elektrode der ersten und der zweiten Elektrode nicht elektrisch leitend mit dem Schaltkontakt verbunden ist und in einem zweiten Zustand die zumindest eine Elektrode elektrisch leitend mit dem Schaltkontakt verbunden ist,
- einem Entladungsraum zwischen der ersten und der zweiten Elektrode,
- einem Kurzschlussmechanismus, der geeignet ist, die erste und die zweite Elektrode kurzzuschließen und den Zustand umzuschalten,
- einem weiteren Entladungsraum, der im Ableiterkörper zwischen dem Schaltkontakt und entweder der ersten oder der zweiten Elektrode vorgesehen ist,
   wobei der weitere Entladungsraum eine höhere Zündspannung als der Entladungsraum hat.

Vorteilhafterweise ist eine dritte Elektrode als Schaltkontakt ausgeführt: Der Ableiter ist vorgesehen mit
- einer ersten Elektrode, einer zweiten Elektrode und einer dritten Elektrode, die als Schaltkontakt ausgeführt ist, wobei in einem ersten Zustand zumindest eine Elektrode der ersten und der zweiten Elektrode nicht elektrisch leitend mit der dritten Elektrode verbunden ist und in einem zweiten Zustand die zumindest eine Elektrode elektrisch leitend mit der dritten Elektrode verbunden ist,
- einem Entladungsraum zwischen der ersten und der zweiten Elektrode, und
- einem Kurzschlussmechanismus, der geeignet ist, die erste, zweite und dritte Elektrode kurzzuschließen und den Zustand umzuschalten.

Innerhalb des Entladungsraumes kann zwischen der ersten und zweiten Elektrode ein Funkenüberschlag erfolgen, wenn eine Überschlagspannung zwischen den Elektroden überschritten wird. Ein Entladungsraum kann auch als Funkenstrecke bezeichnet werden.

Der Kurzschlussmechanismus hat eine Doppelfunktion: Er schließt die erste und zweite Elektrode kurz und schaltet gleichzeitig den Zustand um. Dies kann erfolgen, indem mit dem Kurzschließen der Elektroden gleichzeitig auch das Kurzschließen des Schaltkontaktes erfolgt. In diesem Fall wird vom ersten in den zweiten Zustand umgeschaltet. Dies entspricht einem sich schließenden Schalter.

In einer Ausgestaltung weist der Ableiter einen Ableiterkörper, in dem der Entladungsraum vorgesehen ist, auf. Entweder die erste oder die zweite Elektrode und der Schaltkontakt sind an den Stirnseiten des Ableitkörpers angeordnet und der Schaltkontakt ist außerhalb des Entladungsraumes angeordnet. Der Entladungsraum ist der Bereich zwischen der ersten und zweiten Elektrode. In diesem Bereich verläuft auch der Funken. Der Entladungsraum kann durch die Innenwände des Ableiterkörpers und die Elektroden begrenzt sein.

Eine der Elektroden kann in einem mittleren Bereich des Ableiterkörpers angeordnet sein, sodass sich der Entladungsraum vom mittleren Bereich zu einer der Stirnseiten erstreckt. Solch ein Ableiter kann im Aussehen einem Drei-Elektrodenableiter mit einer Mittel- und zwei Endelektroden ähneln, wobei der Schaltkontakt in Form und Position einer Endelektrode eines Drei-Elektrodenableiters zumindest ähnelt.

Die zumindest eine Elektrode kann die stirnseitige Elektrode oder die Elektrode im mittleren Bereich sein. Die zumindest eine Elektrode kann auch beide Elektroden umfassen, die dann entweder beide mit dem Schaltkontakt elektrisch verbunden oder beide elektrisch von diesem getrennt sind. Die erste Elektrode kann stirnseitig angeordnet sein und die zweite Elektrode kann im mittleren Bereich angeordnet sein.

Der Ableiterkörper ist vorzugsweise aus einem isolierenden, beispielsweise keramischen, Material gefertigt und rohr- oder zylinderförmig ausgestaltet. Der Schaltkontakt und die erste Elektrode dienen als stirnseitige Abschlusskappen am Ableiterkörper.

In einer Ausgestaltung ist im ersten Zustand sowohl die erste als auch die zweite Elektrode nicht elektrisch leitend mit dem Schaltkontakt verbunden und im zweiten Zustand ist sowohl die erste als auch die zweite Elektrode elektrisch leitend mit dem Schaltkontakt verbunden, sodass die Verbindung über den ausgelösten Kurzschlussmechanismus erfolgt.

Vorzugsweise wird mit dem Kurzschließen der ersten und der zweiten Elektrode vom ersten in den zweiten Zustand geschaltet.

Der Ableiter umfasst einen weiteren Entladungsraum im Ableiterkörper zwischen dem Schaltkontakt und entweder der ersten oder der zweiten Elektrode. So können sich die separaten Entladungsräume zu beiden Stirnseiten vom mittleren Bereich erstrecken. Vorteilhafterweise ist der Entladungsraum geschlossen, also ein vollständig vom Ableiterkörper und den Elektroden umschlossener Raum.

Der weitere Entladungsraum hat eine höhere Zündspannung als der Entladungsraum, sodass die

Ableiterfunktion lediglich im Entladungsraum zwischen der ersten und der zweiten Elektrode bereitsteht. Dagegen hat der weitere Entladungsraum eine Dummyfunktion, durch den ein Zwei-Elektrodenableiter, ausgebildet durch die Elektroden und den Entladungsraum, das Erscheinungsbild eines Drei-Elektrodenableiters erhält. Dies erlaubt die Verwendung eines Kurzschlussmechanismus, der eigentlich für einen Drei-Elektrodenableiter vorgesehen ist, sowohl zum Schalten als auch zum Kurzschließen.

Vorteilhafterweise ist der Entladungsraum gasgefüllt und gasdicht abgeschlossen, sodass durch die Wahl eines Gases oder Gasgemisches die Zündeigenschaften beeinflussbar sind.

Der weitere Entladungsraum kann belüftet, beispielsweise mit einer Öffnung, ausgestaltet sein. Dies erhöht die Überschlagspannung. Andere Maßnahmen zu diesem Zweck sind ebenfalls denkbar: Der Abstand der einander zugewandten Seiten der ersten und zweiten Elektrode ist geringer als der Abstand der einander zugewandten Seiten des Schaltkontaktes und der Elektrode im weiteren Entladungsraum.

In einer Ausgestaltung umfasst der Kurzschlussmechanismus einen ausgelenkten Kontakt, dessen Auslenkung durch Wärmeentwicklung gelöst wird und dann einen Kontakt zu der Elektrode herstellt, von der er zuvor beabstandet war. Dadurch stellt der Kurzschlussmechanismus einen Kurzschluss zwischen den Elektroden her.

Der Kurzschlussmechanismus kann einen Arm umfassen, der geeignet ist die erste und zweite Elektrode und den Schaltkontakt kurzzuschließen. Eine derartige Ausgestaltung wird auch als Kurzschlussbügel bezeichnet.

Solch ein Arm kann durch einen schmelzbaren Abstandshalter derart ausgelenkt sein, dass er zumindest von einer der ersten und zweiten Elektrode beabstandet ist und nach dem Aufschmelzen des Abstandshalters die erste und die zweite Elektrode kurzschließt. Solange keine leitende Verbindung zwischen den Elektroden besteht sind Ausführungen denkbar, bei denen eine leitende Verbindung, beispielsweise über einen Abstandhalter aus metallischem Material mit niedrigem Schmelzpunkt zu einer der Elektrode besteht. Alternativ kann auch ein Abstandshalter aus nichtleitendem Material, beispielsweise Kunststoff vorgesehen sein.

Durch die Bewegung des Arms kann im selben Schritt ein Kurzschluss über den Arm mit dem Schaltkontakt erreicht werden. In diesem Fall ist der Arm durch den schmelzbaren Abstandshalter derart ausgelenkt, dass er vom Schaltkontakt beabstandet ist und nach dem Aufschmelzen des Abstandshalters diesen mit den Elektroden kurzschließt.

Vorzugsweise ist der schmelzbare Abstandshalter zwischen dem mittleren Bereich des Arms und der Elektrode im mittleren Bereich des Ableiterkörpers angeordnet und die Enden des Arms, die sich in Richtung der Stirnseiten des Ableiterkörpers erstrecken, sind von dem Schaltkontakt und der anderen Elektrode beabstandet.

Die Erfindung wird im Folgenden anhand der Zeichnungen veranschaulicht.
Figur 1 zeigt eine Seitenansicht eines Ausführungsbeispiels eines Ableiters.
Figur 2 zeigt eine Schnittansicht des Ausführungsbeispiels des Ableiters.
Figur 3 zeigt ein Ersatzschaltbild des Ausführungsbeispiels des Ableiters.

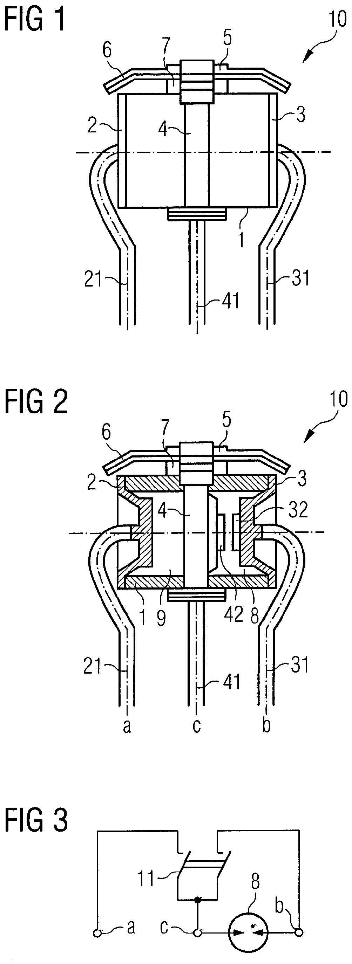

Figur 1 zeigt eine Seitenansicht eines Ausführungsbeispiels eines Ableiters 10. Dieser Ableiter weist eine Kombination von Failshort und Schaltkontakt auf. Der Ableiter 10 ist vorzugsweise ein Gasableiter mit einem gasgefüllten Entladungsraum 8 (in Figur 1 nicht dargestellt) und dient als Überspannungsableiter zum Schutz vor Überspannungsimpulsen.

Der Ableiter 10 umfasst einen zylindrischen Ableiterkörper 1 aus einem isolierenden Material. An dessen Stirnseiten sind ein Schaltkontakt 2 und eine erste Elektrode 3 vorgesehen. Der Schaltkontakt 2 und die erste Elektrode ist jeweils als stirnseitige Verschlusskappe des Ableiterkörpers 1 ausgebildet. Die Außenseiten von Schaltkontakt 2 und erster Elektrode 3, die die Stirnseiten des Ableiterkörpers 1 abschließen, können spiegelsymmetrisch geformt sein.

Sowohl der Schaltkontakt 2 als auch die erste Elektrode 3 können langgestreckte, beispielsweise drahtförmige, Anschlussbereiche 21, 31 umfassen, an denen eine Lötkontaktierung des Ableiters 10 erfolgen kann. In einem mittleren Bereich des Ableiterkörpers 1 ist eine zweite Elektrode 4 vorgesehen. Auch diese weist einen langgestreckten, beispielsweise drahtförmigen, Anschlussbereich 41 auf.

Der Ableiter 10 umfasst ferner einen Kurzschlussmechanismus 5 mit einem ausgelenkten Arm 6, der mittels eines Abstandshalters 7 vom Ableiterkörper 1 beabstandet wird, sodass kein Kontakt mit dem Schaltkontakt 2 und der ersten Elektrode 3 besteht. Der Abstandshalter 7 ist in diesem Ausführungsbeispiels aus einem Material mit geringem Schmelzpunkt, beispielsweise eine sogenannte Lötpille, welche zwischen der zweiten Elektrode 4 und dem mittleren Bereich des Arm 6 derart positioniert ist, dass die Enden des Arms 6 vom Schaltkontakt 2 und der ersten Elektrode 3 beabstandet sind.

Beim Schmelzen des Abstandhalters 7 bewirkt eine Federkraft, dass der Arm sich zum Ableiterkörper 1 bewegt, die erste Elektrode 3 und den Schaltkontakt 2 berührt und somit die erste und zweite Elektrode 3, 4 und den Schaltkontakt 2 kurzschließt. Die Federkraft kann beispielsweise durch eine Federkomponente am Arm und/oder Materialelastizität herrühren.

Der beschriebene Kurzschlussmechanismus 5 ermöglicht das Umschalten von einem ersten Zustand, in dem der Schaltkontakt 2 und die erste und die zweite Elektrode 3, 4 nicht elektrisch leitend verbunden sind, in einen zweiten Zustand, in dem eine elektrisch leitende Verbindung, also ein Kurzschluss, zwischen dem Schaltkontakt 2 und den Elektroden 3, 4 vorliegt.

Der Kurzschlussmechanismus 5 wird durch einen Überstrom, und der damit einhergehenden Wärmeentwicklung, die zum Schmelzen des Abstandshalters 7 führt, ausgelöst.

Figur 2 zeigt eine Schnittansicht des Ausführungsbeispiels des Ableiters aus Figur 1.

Im Ableiterkörper 1 ist ein Entladungsraum 8 zwischen der ersten und zweiten Elektrode 2, 3 vorgesehen, der auch als Funkenstrecke bezeichnet werden kann. Der Entladungsraum 8, begrenzt durch die Innenwände des Ableiterkörpers 1 und die zum Entladungsraum gewandten Seiten 32, 43 der ersten und zweite Elektrode 3, 4, ist gasdicht oder hermetisch abgeschlossen und gasgefüllt. Die zum Entladungsraum 8 gewandten Seiten 32, 43 der ersten und zweite Elektrode 3, 4 sind derart ausgestaltet und geformt, dass bei Ansteigen der Spannung zwischen den beiden Elektroden 3, 4 auf die Überschlagspannung das entstehende elektrische Feld zu einer Ionisation des im Entladungsraum 8 befindlichen Gases führt. Dieses wird leitfähig und die Strecke wird durch einen Funken kurzgeschlossen.

Der Ableiterkörper 1 umfasst einen weiteren Entladungsraum 9 zwischen seinem mittleren Bereich und dem des Schaltkontaktes 2. Dieser weitere Entladungsraum 9 oder Funkenstrecke ist vom Entladungsraum 8 räumlich getrennt, sodass zwei separate Funkenstrecken, zwischen den Potenzialpunkten b-c und den Potenzialpunkten a-c, vorliegen.

Der Entladungsraum 8, also die Funkenstrecke b-c, erfüllt die Funktion einer konventionellen Funkenstrecke, die bei Überschreiten der Überschlagspannung zündet. Dagegen dient der weitere Entladungsraum 9, also die Funkenstrecke a-c, als Dummy ohne die oben beschriebene eigentliche Ableiterfunktion. Ihr Zünden ist nicht vorgesehen. Der weitere Entladungsraum 9 hat eine sehr hohe Zündspannung. Er kann belüftet ausgebildet sein. Diese Zündstrecke entspricht einem geöffneten Schalter. Alternativ oder zusätzlich können die zweite Elektrode 4 und der Schaltkontakt 2 derart ausgebildet sein, dass ihr Abstand größer ist als der zwischen der ersten und der zweiten Elektrode 3, 4, wodurch auch die Überschlagspannung größer ist. Wenn der Kurzschlussmechanismus ausgelöst wird, schließt eine Seite des Arms 6 den Zwei-Elektrodenableiter mit der ersten und zweiten Elektrode 3, 4 kurz, die andere Seite des Arms 6 schließt den Schalter und stellt eine leitende Verbindung zu den Elektroden 3, 4 her.

Figur 3 zeigt ein Ersatzschaltbild des Ausführungsbeispiels des Ableiters.

Die Potenzialknoten b, c, zwischen denen der Ableiter 10 gekoppelt ist, entsprechen den Schaltkontakten 31, 41 der ersten und zweiten Elektrode 3, 4. Zwischen dem Potenzialknoten a, der dem Schaltkontakt 2 entspricht und dem Potenzialknoten b ist ein Schalter gekoppelt. Auch zwischen den Potenzialknoten b, c ist ein Schalter gekoppelt. Die Schalter 11 sind derart miteinander gekoppelt, dass die Verbindungen zwischen den oben genannten Potenzialknoten entweder gleichzeitig unterbrochen sind oder eine elektrisch leitende Verbindung besteht.

Das Schaltbild veranschaulicht die Funktionsweise des Ableiters. Wenn der Kurzschlussmechanismus nicht ausgelöst ist, sind die Schalter 11 geöffnet. Mit Auslösen des Kurzschlussmechanismus schließen sich die Schalter 11.

Das äußere Erscheinungsbild des Ableiters 10 und die Dimensionierung seiner Teile entspricht vorteilhafterweise einem konventionellem Drei-Elektrodenableiter. Der Schaltkontakt 2 ist wie eine der äußeren Elektroden des Drei-Elektrodenableiters geformt. Durch das Beibehalten des Designs eines Drei-Elektrodenableiters können für Drei-Elektrodenableiter konstruierte Kurzschlussmechanismen auch für den beschriebenen Ableiter mit der Funktion eines Zwei-Elektrodenableiters mit Schalter verwendet werden.

### Bezugszeichen

- 1: Ableiterkörper
- 2: Schaltkontakt
- 3, 4: Elektrode
- 21, 31, 41: Anschlussbereich
- 32, 42: Innenseite
- 5: Kurzschlussmechanismus
- 6: Arm
- 7: Abstandshalter
- 8: Entladungsraum
- 9: weiterer Entladungsraum
- 10: Ableiter
- 11: Schalter

## Patentansprüche

1. Ableiter (10) mit
- einer ersten Elektrode (3), einer zweiten Elektrode (4) und einem Schaltkontakt (2), wobei in einem ersten Zustand zumindest eine Elektrode der ersten und der zweiten Elektrode (3, 4) nicht elektrisch leitend mit dem Schaltkontakt (2) verbunden ist und in einem zweiten Zustand die zumindest eine Elektrode elektrisch leitend mit dem Schaltkontakt (2) verbunden ist,
- einem Entladungsraum (8) zwischen der ersten und der zweiten Elektrode (3, 4),
- einem Kurzschlussmechanismus (5), der bei einem Auslösen die erste und die zweite Elektrode (3, 4) kurzschließt und den Zustand umschaltet,
- einem weiteren Entladungsraum (9), der im Ableiterkörper (1) zwischen dem Schaltkontakt (2) und entweder der ersten oder der zweiten Elektrode (3, 4) vorgesehen ist, wobei
der weitere Entladungsraum (9) eine höhere Zündspannung als der Entladungsraum (8) hat.

2. Ableiter (10) nach Anspruch 1
mit einem Ableiterkörper (1), in dem der Entladungsraum (8) vorgesehen ist, wobei entweder die erste oder die zweite Elektrode (3, 4) und der Schaltkontakt (2) an den Stirnseiten des Ableitkörpers (1) angeordnet sind und der Schaltkontakt (2) außerhalb des Entladungsraumes (8) angeordnet ist.

3. Ableiter (10) nach Anspruch 1 oder 2,
wobei im ersten Zustand sowohl die erste als auch die zweite Elektrode (3, 4) nicht elektrisch leitend mit dem Schaltkontakt (2) verbunden sind und im zweiten Zustand sowohl die erste als auch die zweite Elektrode (3, 4) elektrisch leitend mit dem Schaltkontakt (2) verbunden sind.

4. Ableiter (10) nach einem der Ansprüche 1 bis 3,
der mit dem Kurzschließen der ersten und der zweiten Elektrode (3, 4) vom ersten in den zweiten Zustand schaltet.

5. Ableiter nach einem der Ansprüche 1 bis 4,
wobei der Entladungsraum (8) gasdicht abgeschlossen und gasgefüllt ist.

6. Ableiter nach einem der Ansprüche 1 bis 5,
wobei der weitere Entladungsraum (9) belüftet ist.

7. Ableiter nach einem der Ansprüche 1 bis 6,
wobei der Abstand der einander zugewandten Seiten (32, 42) der ersten und zweiten Elektrode (3, 4) geringer ist als der Abstand der einander zugewandten Seiten des Schaltkontaktes (2) und der Elektrode im weiteren Entladungsraum (9).

8. Ableiter nach einem der Ansprüche 1 bis 7,
wobei der Kurzschlussmechanismus (5) einen ausgelenkten Kontakt umfasst, dessen Auslenkung durch Wärmeentwicklung gelöst wird.

9. Ableiter nach einem der Ansprüche 1 bis 8,
wobei der Kurzschlussmechanismus (5) einen Arm (6) umfasst, der geeignet ist die erste und die zweite Elektrode (3, 4) und den Schaltkontakt (2) kurzzuschließen.

10. Ableiter nach Anspruch 9,
wobei der Arm (6) durch einen schmelzbaren Abstandshalter (7) derart ausgelenkt ist, dass er zumindest von einer der ersten und der zweiten Elektrode (3, 4) beabstandet ist und nach dem Schmelzen des Abstandshalters (7) die erste und die zweite Elektrode (3, 4) durch Federkraft kurzschließt.

11. Ableiter nach Anspruch 10,
wobei der Arm (6) durch den schmelzbaren Abstandshalter (7) derart ausgelenkt ist, dass er vom Schaltkontakt (2) beabstandet ist und nach dem Schmelzen des Abstandshalters (7) diesen mit der ersten und der zweiten Elektrode (3, 4) kurzschließt.

12. Ableiter nach Anspruch 10 oder 11,
wobei der schmelzbare Abstandstandhalter (7) zwischen dem mittleren Bereich des Arms (6) und der Elektrode (4) im mittleren Bereich des Ableiterkörpers (1) angeordnet ist und die Enden des Arms (6), die sich in Richtung der Stirnseiten des Ableiterkörpers (1) erstrecken, von dem Schaltkontakt (2) und der anderen Elektrode (3) beabstandet sind.

## Claims

1. Arrester (10) comprising
- a first electrode (3), a second electrode (4) and a switching contact (2), wherein, in a first state, at least one electrode of the first and the second electrode (3, 4) is not electrically conductively connected to the switching contact (2) and, in a second state, the at least one electrode is electrically conductively connected to the switching contact (2),
- a discharge space (8) between the first and the second electrode (3, 4),
- a short-circuiting mechanism (5) which, when triggered, short-circuits the first and the second electrode (3, 4) and switches the state,
- a further discharge space (9) which is provided in the arrester body (1) between the switching contact (2) and either the first or the second electrode (3, 4), wherein the further discharge space (9) has a higher ignition voltage than the discharge space (8).

2. Arrester (10) according to Claim 1, comprising an arrester body (1) in which the discharge space (8) is provided, wherein either the first or the second electrode (3, 4) and the switching contact (2) are arranged on the end sides of the arrester body (1) and the switching contact (2) is arranged outside the discharge space (8).

3. Arrester (10) according to Claim 1 or 2, wherein, in the first state, both the first and the second electrode (3, 4) are not electrically conductively connected to the switching contact (2) and, in the second state, both the first and the second electrode (3, 4) are electrically conductively connected to the switching contact (2).

4. Arrester (10) according to one of Claims 1 to 3, which switches from the first to the second state with the short-circuiting of the first and the second electrode (3, 4).

5. Arrester according to one of Claims 1 to 4, wherein the discharge space (8) is sealed in a gas-tight manner and is filled with gas.

6. Arrester according to one of Claims 1 to 5, wherein the further discharge space (9) is ventilated.

7. Arrester according to one of Claims 1 to 6, wherein the spacing of the mutually facing sides (32, 42) of the first and second electrode (3, 4) is smaller than the spacing of the mutually facing sides of the switching contact (2) and the electrode in the further discharge space (9).

8. Arrester according to one of Claims 1 to 7, wherein the short-circuiting mechanism (5) comprises a deflected contact, the deflection of which is relaxed by the development of heat.

9. Arrester according to one of Claims 1 to 8, wherein the short-circuiting mechanism (5) comprises an arm (6) which is suitable for short-circuiting the first and the second electrode (3, 4) and the switching contact (2).

10. Arrester according to Claim 9, wherein the arm (6) is deflected by a meltable spacer (7) in such a way that said arm is spaced apart at least from one of the first and the second electrode (3, 4) and, after the spacer (7) has melted, said arm short-circuits the first and the second electrode (3, 4) by spring force.

11. Arrester according to Claim 10, wherein the arm (6) is deflected by the meltable spacer (7) in such a way that said arm is spaced apart from the switching contact (2) and, after the spacer (7) has melted, said arm short-circuits said switching contact with the first and the second electrode (3, 4).

12. Arrester according to Claim 10 or 11, wherein the meltable spacer (7) is arranged between the central region of the arm (6) and the electrode (4) in the central region of the arrester body (1) and the ends of the arm (6), which extend in the direction of the end sides of the arrester body (1), are spaced apart from the switching contact (2) and the other electrode (3).

## Revendications

1. Parafoudre (10), comprenant
- une première électrode (3), une deuxième électrode (4) et un contact de commutation (2), dans un premier état, au moins une électrode parmi la première et la deuxième électrode (3, 4) n'étant pas reliée de manière électriquement conductrice au contact de commutation (2) et dans un deuxième état, l'au moins une électrode étant reliée de manière électriquement conductrice au contact de commutation (2),
- un espace de décharge (8) entre la première et la deuxième électrode (3, 4),
- un mécanisme de court-circuit (5) qui, lors d'un déclenchement, court-circuite la première et la deuxième électrode (3, 4) et inverse l'état,
- un espace de décharge supplémentaire (9), qui se trouve dans le corps de parafoudre (1) entre le contact de commutation (2) et soit la première soit la deuxième électrode (3, 4),
l'espace de décharge supplémentaire (9) ayant une tension de claquage supérieure à celle de l'espace de décharge (8) .

2. Parafoudre (10) selon la revendication 1, comprenant un corps de parafoudre (1) dans lequel se trouve un espace de décharge (8), soit la première soit la deuxième électrode (3, 4) et le contact de commutation (2) étant disposés au niveau des côtés frontaux du corps de parafoudre (1) et le contact de commutation (2) étant disposé à l'extérieur de l'espace de décharge (8).

3. Parafoudre (10) selon la revendication 1 ou 2, dans le premier état, ni la première ni la deuxième électrode (3, 4) n'étant reliée de manière électriquement conductrice au contact de commutation (2) et, dans le deuxième état, à la fois la première et la deuxième électrode (3, 4) étant reliées de manière électriquement conductrice au contact de commutation (2).

4. Parafoudre (10) selon l'une des revendications 1 à 3, qui commute du premier au deuxième état avec la mise en court-circuit de la première et de la deuxième électrode (3, 4).

5. Parafoudre selon l'une des revendications 1 à 4, l'espace de décharge (8) étant fermé de manière hermétique aux gaz et rempli de gaz.

6. Parafoudre selon l'une des revendications 1 à 5, l'espace de décharge supplémentaire (9) étant aéré.

7. Parafoudre selon l'une des revendications 1 à 6, l'écart entre les côtés (32, 42) se faisant mutuellement face de la première et de la deuxième électrode (3, 4) étant plus petit que l'écart entre les côtés se faisant mutuellement face du contact de commutation (2) et de l'électrode dans l'espace de décharge supplémentaire (9).

8. Parafoudre selon l'une des revendications 1 à 7, le mécanisme de court-circuit (5) comportant un contact dévié dont la déviation est déclenchée par la production de chaleur.

9. Parafoudre selon l'une des revendications 1 à 8, le mécanisme de court-circuit (5) comportant un bras (6) qui est adapté pour court-circuiter la première et la deuxième électrode (3, 4) et le contact de commutation (2) .

10. Parafoudre selon la revendication 9, le bras (6) étant dévié par une entretoise fusible (7) de telle sorte qu'il est espacé d'au moins l'une parmi la première et la deuxième électrode (3, 4) et, après la fusion de l'entretoise (7), court-circuite la première et la deuxième électrode (3, 4) par la force de ressort.

11. Parafoudre selon la revendication 10, le bras (6) étant dévié par une entretoise fusible (7) de telle sorte qu'il est espacé du contact de commutation (2) et, après la fusion de l'entretoise (7), court-circuite celui-ci avec la première et la deuxième électrode (3, 4).

12. Parafoudre selon la revendication 10 ou 11, l'entretoise fusible (7) étant disposée entre la zone centrale du bras (6) et l'électrode (4) dans la zone centrale du corps de parafoudre (1) et les extrémités du bras (6), qui s'étendent en direction des côtés frontaux du corps de parafoudre (1), étant espacées du contact de commutation (2) et de l'autre électrode (3).
